(19) Europäisches Patentamt
European Patent Office
Office européen des brevets

(11)  EP 2 667 351 B1

## (12) EUROPEAN PATENT SPECIFICATION

(45) Date of publication and mention
of the grant of the patent:
**03.06.2015 Bulletin 2015/23**

(51) Int Cl.:
**G06T 5/00** (2006.01)       **G06T 3/40** (2006.01)

(21) Application number: **13152536.2**

(22) Date of filing: **24.01.2013**

(54) **Image processing device and image processing method**

Bildverarbeitungsvorrichtung und Bildverarbeitungsverfahren

Dispositif de traitement d'images et procédé de traitement d'images

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.05.2012 JP 2012118950**

(43) Date of publication of application:
**27.11.2013 Bulletin 2013/48**

(73) Proprietor: **Kabushiki Kaisha Toshiba
Minato-ku,
Tokyo 105-8001 (JP)**

(72) Inventors:
• **Takahashi, Yukie
Tokyo, 105-8001 (JP)**
• **Imada, Kei
Tokyo, 105-8001 (JP)**

(74) Representative: **Henkel, Breuer & Partner
Patentanwälte
Maximiliansplatz 21
80333 München (DE)**

(56) References cited:
**US-B1- 6 760 489**

• **SUNIL PRASAD JAISWAL ET AL: "A low complex context adaptive image interpolation algorithm for real-time applications", INSTRUMENTATION AND MEASUREMENT TECHNOLOGY CONFERENCE (I2MTC), 2012 IEEE INTERNATIONAL, IEEE, 13 May 2012 (2012-05-13), pages 969-972, XP032197073, DOI: 10.1109/I2MTC.2012.6229348 ISBN: 978-1-4577-1773-4**
• **VIEIRA NETO ET AL: "Visual novelty detection with automatic scale selection", ROBOTICS AND AUTONOMOUS SYSTEMS, ELSEVIER SCIENCE PUBLISHERS, AMSTERDAM, NL, vol. 55, no. 9, 24 August 2007 (2007-08-24), pages 693-701, XP022211128, ISSN: 0921-8890, DOI: 10.1016/J.ROBOT.2007.05.012**

EP 2 667 351 B1

**Description**

The invention relates generally to an image processing device and an image processing method.

BACKGROUND

Conventionally, a feature amount indicating features of an image is calculated for each predetermined block and image processing is performed based on the feature amount calculated for each block. Furthermore, in terms of the feature amount calculated for each block, in order to moderate differences of the feature amounts between adjacent blocks, processing such as Bi linear interpolation is performed based on centers of the respective adjacent blocks so as to interpolate the feature amounts, conventionally.

In the above-mentioned conventional interpolation method, the feature amounts of the adjacent blocks influence (flow out) on each other. Therefore, for example, the feature amount of the adjacent block is applied to a block of which feature amount is zero or is extremely low unintentionally. In this case, if image processing such as processing of making image quality higher is performed based on the feature amounts, there is a possibility that artifact noise is generated on an image portion to which the feature amount has been applied unintentionally. The artifact noise becomes a factor of deterioration of image quality.

BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary diagram illustrating a configuration example of a television device (image processing device) according to an embodiment;

FIG. 2 is an exemplary diagram illustrating a functional configuration of an image processor as illustrated in FIG. 1 in the embodiment;

FIG. 3 is an exemplary view illustrating a relationship between a processing target block and reference blocks in the embodiment;

FIG. 4 is an exemplary view illustrating a division example of the processing target block in the embodiment;

FIG. 5 is an exemplary view for explaining an example of an interpolation coefficient setting method in the embodiment;

FIG. 6 is an exemplary view for explaining another example of the interpolation coefficient setting method in the embodiment;

FIG. 7 is an exemplary graph illustrating an example of feature amounts calculated by a feature amount calculator in the embodiment;

FIG. 8 is an exemplary graph illustrating an interpolation result by a feature amount interpolator in the embodiment;

FIG. 9 is an exemplary graph illustrating an interpolation result by a conventional interpolating method;

FIG. 10 is an exemplary flowchart illustrating a procedure of image processing in the embodiment; and

FIG. 11 is an exemplary flowchart illustrating a procedure of feature amount interpolation processing in the embodiment.

SUMMARY

To overcome the problems and achieve the object mentioned above, there is provided an image processing device as set out in independent claim 1 and an image processing method as set out in independent claim 9. Advantageous developments are defined in the dependent claims.

DETAILED DESCRIPTION

Hereinafter, embodiments of an image processing device and an image processing method according to the invention are described in detail with reference to the drawings. It is to be noted that in the embodiment, an example in which the image processing device and the image processing method according to the invention are applied to a television device is described. However, the invention is not limited to the television device.

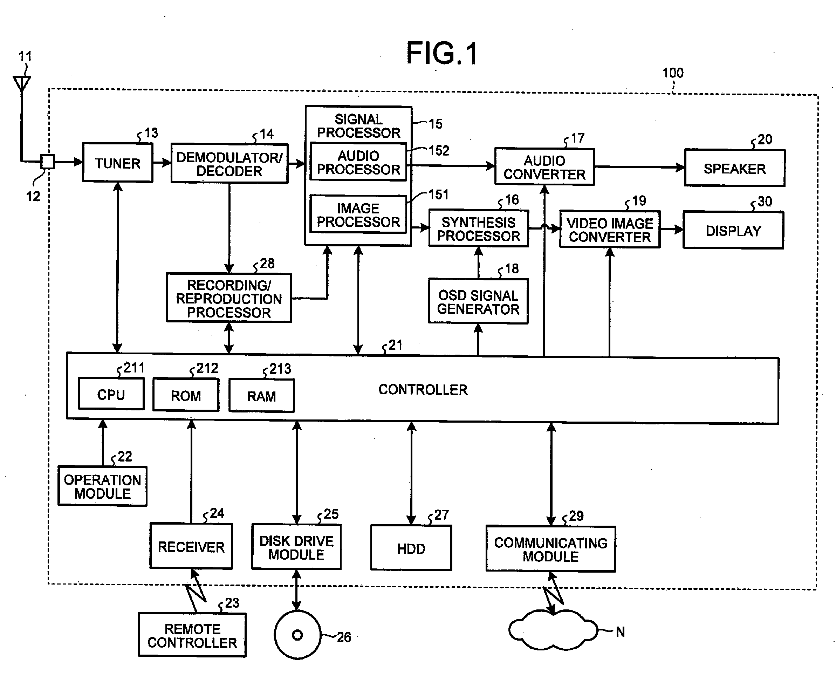

FIG. 1 is a diagram illustrating a configuration example of a television device 100 according to the embodiment. As illustrated in FIG. 1, the television device 100 supplies a broadcast signal received by an antenna 11 to a tuner 13 through an input terminal 12, so that a broadcast signal of a desired channel can be selected.

The television device 100 supplies the broadcast signal selected by the tuner 13 to a demodulator/decoder 14 so as to restore it to a digital video image signal, a digital audio signal, and the like. Then, the television device 100 outputs the digital video image signal, the digital audio signal, and the like to a signal processor 15.

The signal processor 15 comprises an image processor 151 and an audio processor 152. The image processor 151 performs predetermined image processing on the digital video image signal supplied from the demodulator/decoder 14. The audio processor 152 performs predetermined audio processing on the digital audio signal supplied from the demodulator/decoder 14.

The image processor 151 performs predetermined image processing for making image quality higher on the digital video image signal supplied from the demodulator/decoder 14 and outputs the digital video image signal after the image processing to a synthesis processor 16. Furthermore, the audio processor 152 outputs the processed digital audio signal to an audio converter 17. It is to be noted that a detail configuration of the image processor 151 will be described later.

The synthesis processor 16 superimposes subtitle, a graphical user interface (GUI), and an on screen display (OSD) signal on the digital video image signal supplied from the signal processor 15 (image processor 151) and outputs it. The OSD signal is a superimposition video image signal of OSD and the like. The subtitle, the GUI, and the OSD signal have been generated by an OSD signal generator 18.

The television device 100 supplies the digital video image signal output from the synthesis processor 16 to a video image converter 19. The video image converter 19 converts the input digital video image signal to an analog video image signal in a format that can be displayed on a display 30 at a subsequent stage. The television device 100 supplies the analog video image signal output from the video image converter 19 to the display 30 for video image display. The display 30 comprises a display device such as a liquid crystal display (LCD) and displays the analog video image signal output from the video image converter 19.

The audio converter 17 converts the digital audio signal supplied from the signal processor 15 (audio processor 152) to an analog audio signal in a format that can be reproduced on a speaker 20 at a subsequent stage. Then, the analog audio signal output from the audio converter 17 is supplied to the speaker 20 for audio reproduction.

Then, the television device 100 controls the entire operations comprising the above-mentioned various types of reception operations by a controller 21 overall. The controller 21 comprises a central processing unit (CPU) 211, a read only memory (ROM) 212, and a random access memory (RAM) 213. Computer programs that are executed by the CPU 211 are stored in the ROM 212. The RAM 213 provides an operation area for the CPU 211. The CPU 211 and various computer programs are operated in combination, so that operations of the respective parts are controlled overall.

To be more specific, the controller 21 receives operation information from an operation module 22 installed on a main body of the television device 100 or receives operation information that has been sent from a remote controller 23 and received by a receiver 24 and controls the respective parts such that operation contents thereof are reflected.

Furthermore, the controller 21 acquires an electronic program guide such as an electronic program guide (EPG) from the signal restored by the demodulator/decoder 14. Then, the controller 21 supplies the electronic program guide to the OSD signal generator 18 and the video image converter 19 in accordance with operations on the operation module 22 or the remote controller 23 by a viewer so as to provide a program list of programs that are being broadcasted and are to be broadcasted to the viewer. Note that the electronic program guide comprises program information indicating program IDs (for example, broadcast stations and broadcast times) for identifying programs, titles and genres of the programs, program outlines, and program contents such as casts for the respective programs that are being broadcasted and are to be broadcasted.

Furthermore, a disk drive module 25 may be connected to the controller 21. An optical disk 26 such as a Blu-ray disc (BD) and a digital versatile disk (DVD) is attached to the disk drive module 25 in a detachable manner. The disk drive module 25 has a function of performing recording and reproduction of digital data on the attached optical disk 26.

The controller 21 can control to record the digital video image signal and the digital audio signal obtained from the demodulator/decoder 14 in the optical disk 26 in the following manner. That is, the controller 21 controls a recording/reproduction processor 28 to encrypt the digital video image signal and the digital audio signal and convert them to be in a predetermined recording format based on the operation on the operation module 22 or the remote controller 23 by the viewer. Thereafter, the controller 21 controls to supply them to the disk drive module 25 and record them in the optical disk 26.

Moreover, a hard disk drive (HDD) 27 is connected to the controller 21. The HDD 27 may be an external device. If a program to be recorded is specified through the operation module 22 or the remote controller 23 from the viewer, the controller 21 controls the recording/reproduction processor 28 to encrypt a video image signal and an audio signal (hereinafter, referred to as program data) of the program that are obtained from the demodulator/decoder 14 and convert them to be in a predetermined recording format. Thereafter, the controller 21 controls to supply them to the HDD 27 and record them in the HDD 27. Recording of the program is thus performed.

Furthermore, the controller 21 controls to load the program data of the program recorded in the HDD 27 or cause the disk drive module 25 to load the digital video image signal and the digital audio signal from the optical disk 26 based on the operation of the operation module 22 or the remote controller 23 by the viewer. Then, the controller 21 controls the recording/reproduction processor 28 to decode the program data or the digital video image signal and the digital audio signal. Thereafter, the controller 21 controls to supply them to the signal processor 15 for the above-mentioned video image display and audio reproduction.

In addition, a communicating module 29 is connected to the controller 21. The communicating module 29 is a communication interface that can be connected to network N such as the Internet. The controller 21 performs transmission and reception of various types of information to/from an external device (not illustrated) connected to the network N through the communicating module 29.

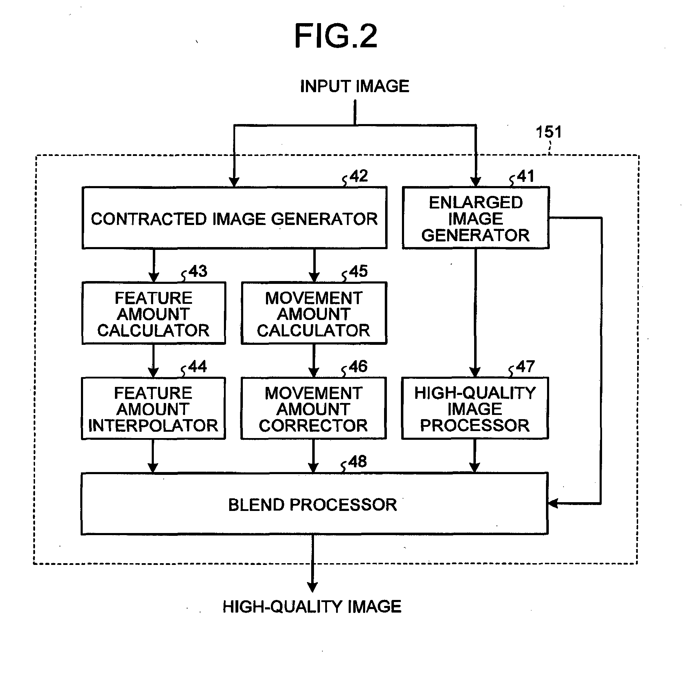

Next, a functional configuration of the above-mentioned image processor 151 is described. FIG. 2 is a diagram illustrating the functional configuration of the image processor 151. As illustrated in FIG. 2, the image processor 151 comprises an enlarged image generator 41, a contracted image generator 42, a feature amount calculator 43, a feature amount interpolator 44, a movement amount calculator 45, a movement amount corrector 46, a high-quality image processor 47, and a blend processor 48 as functional modules relating to the image processing of the digital video image signal. It is to be noted that the digital video image signal for each frame that has been supplied from the demodulator/decoder 14 is referred to as an input image.

The enlarged image generator 41 generates an enlarged image obtained by enlarging a size of the input image supplied from the demodulator/decoder 14 to a predetermined enlarged size and outputs the generated enlarged image to the high-quality image processor 47 and the blend processor 48. Note that the enlarged image generating method is not limited particularly and the enlarged image generator 41 may generate the enlarged image by using an interpolation algorithm such as cubic convolution. Furthermore, the enlarged size is not limited particularly but it is preferable that the enlarged size be made to a value in accordance with a display size, resolution, and the like of the display 30, for example. When the size of the input image matches with the enlarged size, the input image is output as it is as the enlarged image.

In order to reduce load relating to processing at a subsequent stage, the contracted image generator 42 generates a contracted image obtained by contracting a size of the input image supplied from the demodulator/decoder 14 to a predetermined contracted size (for example, 1/4 or 1/16 of the input image) and outputs the contracted image to the movement amount calculator 45 and the feature amount calculator 43. Note that the contracted image generating method is not limited particularly and the contracted image generator 42 may generate the contracted image by using an interpolation algorithm such as bi-linear or bi-cubic. Furthermore, the contracted size is not limited particularly but it is preferable that the contracted size may be determined in accordance with a size of a block as a unit of processing by the movement amount calculator 45, which will be described later, for example.

The feature amount calculator 43 calculates the feature amount indicating features of the contracted image for each predetermined first block constituting the contracted image. For example, the feature amount calculator 43 obtains activity indicating the fluctuation degree of pixel values (brightness or the like) between adjacent pixels and performs non-linear or linear conversion based on the activity. The feature amount calculator 43 thus calculates the feature amount expressed by a numerical value range of 0.0 to 1.0, for example, for each first block. The size of the first block is not limited particularly and an arbitrary value such as 32 x 32 pixels can be employed. It is to be noted that the feature amount calculating method is not limited particularly and a known technique can be used.

The feature amount interpolator 44 interpolates feature amounts at respective positions of the first block to be processed (hereinafter, referred to as processing target block) by using interpolation coefficients based on positional relationships between the processing target block and first blocks adjacent to the processing target block (hereinafter, referred to as reference blocks) in order to moderate the differences of the feature amounts between the adjacent first blocks.

To be more specific, the feature amount interpolator 44 sequentially selects processing target blocks among a plurality of first blocks constituting the contracted image. Then, the feature amount interpolator 44 determines whether the feature amount of each processing target block exceeds a predetermined threshold $\alpha$. When the feature amount of the processing target block is equal to or smaller than the threshold $\alpha$, the feature amount interpolator 44 excludes the processing target block from processing targets so as to keep the original feature amount thereof. It is to be noted that the threshold $\alpha$ is not limited particularly. For example, it is preferable that the threshold $\alpha$ be set to a value at which change of an original image (enlarged image) cannot be recognized when blending processing is performed by the blend processor 48, which will be described later.

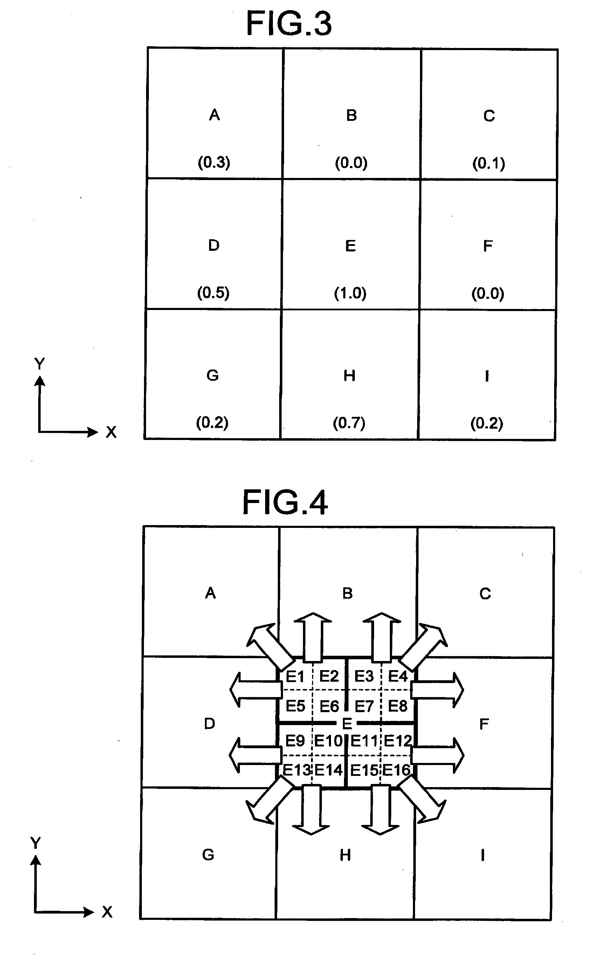

On the other hand, when the feature amount of the processing target block exceeds the threshold $\alpha$, the feature amount interpolator 44 divides the processing target block into a plurality of sub blocks. Then, the feature amount interpolator 44 sets an interpolation coefficient for each sub block and interpolates the feature amount of each block by using the corresponding interpolation coefficient. It is to be noted that the size and the number of sub blocks are not limited particularly. Furthermore, in the embodiment, interpolation coefficients are set for two components in the X direction and the Y direction intersecting with the X direction (see FIG. 3).

When the interpolation coefficients are set, the feature amount interpolator 44 changes a condition relating to the positional relationships between the processing target block and the reference blocks as the standards of the interpolation coefficients in accordance with whether the feature amounts of the reference blocks are equal to or smaller than the threshold $\alpha$. To be more specific, when a reference block of which feature amount is equal to or smaller than

the threshold $\alpha$ is present among the reference blocks adjacent to the processing target block, the feature amount interpolator 44 sets interpolation coefficients for each sub block based on the center of the processing target block and a boundary of the reference block. Furthermore, the feature amount interpolator 44 sets interpolation coefficients for each sub block based on the center of the processing target block and the centers of respective reference blocks for the reference blocks of which feature amounts exceed the threshold $\alpha$.

Then, the feature amount interpolator 44 interpolates a feature amount of each sub block by using the interpolation coefficient set for the sub block.

Hereinafter, operations of the feature amount interpolator 44 are described with reference to FIG. 3 to FIG. 5. FIG. 3 is a view illustrating the relationship between the processing target block and the reference blocks. In FIG. 3, a first block E is assumed to be the processing target block. Therefore, first blocks A to D, and F to I adjacent to the first block E correspond to the reference blocks. It is to be noted that a numerical value indicated in parentheses "( )" is assumed to be a feature amount and the threshold $\alpha$ is assumed to be "0.0".

As illustrated in FIG. 3, the feature amount "1.0" of the first block E as the processing target block exceeds the threshold $\alpha$. Therefore, the feature amount interpolator 44 divides the first block E into a plurality of sub blocks as illustrated in FIG. 4.

FIG. 4 is a view illustrating a division example of the processing target block. In FIG. 4, the first block E as the processing target block is divided into 16 sub blocks E1 to E16 each of which is formed by $8 \times 8$ pixels.

In FIG. 4, the feature amount interpolator 44 determines whether a reference block of which feature amount is equal to or smaller than the threshold $\alpha$ is present by referring to the feature amounts of the reference blocks (first blocks A to D and F to I) adjacent to the first block E. In the embodiment, as illustrated in FIG. 3, the feature amounts of the first blocks B and F are (0.0). Therefore, the feature amount interpolator 44 determines that the feature amounts of the first blocks B and F are equal to or smaller than the threshold $\alpha$ and the feature amounts of the first blocks A, C, D, G to I exceed the threshold $\alpha$.

Subsequently, the feature amount interpolator 44 sets the interpolation coefficients in the X direction and the Y direction for each of the sub blocks E1 to E16 based on the above determination result. The feature amount interpolator 44 selects reference blocks to be used for setting the interpolation coefficients among the first blocks A to D and F to I based on arrangement positions of the sub blocks E1 to E16.

For example, in a case of the state as illustrated in FIG. 4, for each of the sub blocks (E1, E2, E5, and E6) arranged at an upper left portion in the first block E, the first blocks A, B, and D present in the vicinity of the sub blocks are selected. Then, for each of the sub blocks (E3, E4, E7, and E8) arranged at an upper right portion in the first block E, the first blocks B, C, and F are selected. In the same manner, for each of the sub blocks (E9, E10, E13, and E14) arranged at a lower left portion in the first block E, the first blocks D, G, and H are selected. Furthermore, for each of the sub blocks (E11, E12, E15, and E16) arranged in a lower right portion in the first block E, the sub blocks F, H, and I are selected. Thus, the interpolation coefficients are set by using the reference blocks closer to the arrangement position of each sub block. The differences of the feature amounts between the processing target block and the reference blocks can be interpolated more efficiently accordingly.

For example, when focusing on the sub block E6, the feature amount of the first block B is equal to or smaller than the threshold $\alpha$ among the first blocks A, B, and D as the reference blocks. Therefore, the feature amount interpolator 44 sets the interpolation coefficient of the sub block E6 in the Y direction corresponding to the presence direction of the first block B based on the center of the first block E and the boundary of the first block B. Furthermore, no reference block of which feature amount is equal to or smaller than the threshold $\alpha$ is present in the X direction. Therefore, the feature amount interpolator 44 sets the interpolation coefficient of the sub block E6 in the X direction based on the center of the first block E and the centers of the reference blocks (first blocks A, B, and D). Then, the feature amount interpolator 44 interpolates the feature amount of the sub block E6 by using the interpolation coefficients defined in the respective directions.

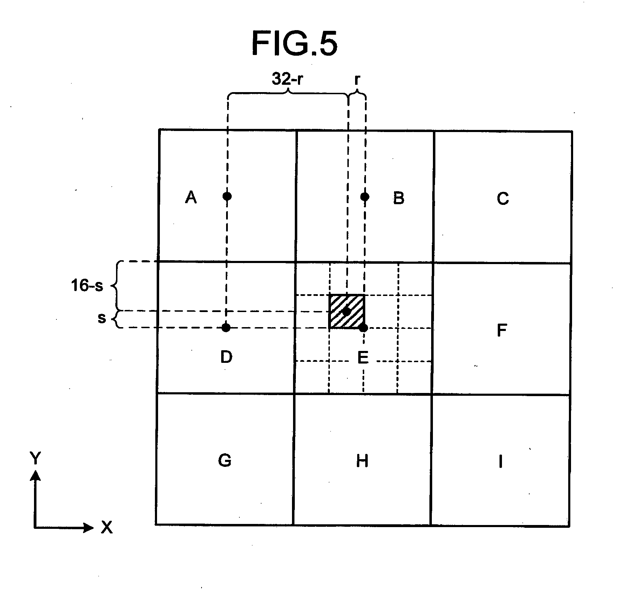

FIG. 5 is a view for explaining an example of an interpolation coefficient setting method that is performed by the feature amount interpolator 44 and corresponds to the first blocks (sub blocks) as illustrated in FIG. 4. Furthermore, in FIG. 5, a distance is indicated on a pixel basis. A distance between the center of the first block E as the processing target block and an arbitrary pixel (for example, center pixel) in the sub block E6 in the X direction is assumed to be "r" and a distance therebetween in the Y direction is assumed to be "s". It is to be noted that hereinafter, a position of the arbitrary pixel in the sub block E6 is indicated as a pixel of the sub block E6 for convenience of explanation.

As described above, the feature amount interpolator 44 sets the interpolation coefficient relating to the sub block E6 in the Y direction based on the center of the first block E and the boundary of the first block B. For example, when the bi-linear interpolation is used as the feature amount interpolating method, the feature amount interpolator 44 obtains a ratio (s:16-s) of the separated distances in the Y direction from positional relationships of the center of the first block E and the boundary of the first block B correspond to the position of the sub block E6. Then, the feature amount interpolator 44 sets the interpolation coefficient in the Y direction based on the ratio.

Furthermore, the feature amount interpolator 44 sets the interpolation coefficient relating to the sub block E6 in the X direction based on the center of the first block E and the centers of the first blocks A, B, and D. For example, when the bi-linear interpolation is used as in the above-mentioned processing, the feature amount interpolator 44 obtains a ratio (r:32-r) of the separated distances in the X direction from positional relationships of the center of the first block E and the centers of the reference blocks correspond to the position of the sub block E6. Then, the feature amount interpolator 44 sets the interpolation coefficient in the X direction based on the ratio. It is to be noted that the interpolation coefficient is set so as to be larger as the separated distances are shorter.

After the above-mentioned interpolation coefficients have been set, the feature amount interpolator 44 derives an interpolated feature amount obtained by interpolating the feature amount of the sub block E6 by using the following equation (1), for example. It is to be noted that the feature amounts of the first blocks A, B, and D as the reference blocks are input to "A, B, and D" in the following equation (1), and the feature amount of the first block E as the processing target block is input to "E" in the following equation (1).

```
Interpolated Feature Amount = (A*(r/32) + B*((32 - r)/32))*(s/16)

+ (D*(r/32) + E*((32 - r)/32))*((16 - s)/16)            (1)
```

In the above-mentioned equation (1), "(A*(r/32) + B*((32 - r)/32))" at a first term on a right side indicates the degree of influence of the feature amounts of the first blocks A and B on the sub block E6 in the X direction. Furthermore, "(D* (r/32) + E* ((32 - r) /32))" at a second term on the right side indicates the degree of influence of the feature amounts of the first blocks D and E on the sub block E6 in the X direction. "(r/32)" and "((32 - r)/32)" in the equations indicating the degree of influence in the X direction are interpolation coefficients in the X direction. "(r/32)" and "((32 - r)/32)" are set based on a ratio of the separated distance "r" between the position of the sub block E6 and the centers of the first blocks E and B in the X direction and the separated distance "32-r" between the position of the sub block E6 and the centers of the first blocks A and D in the X direction.

Furthermore, "(s/16)" at the first term on the right side indicates the degree of influence of the feature amounts of the first blocks A and B on the sub block E6 in the Y direction. "((16-s)/16)" at the second term on the right side indicates the degree of influence of the feature amounts of the first blocks D and E on the sub block E6 in the Y direction. Furthermore, " (s/16) " and " ( (16-s) /16) " are interpolation coefficients in the Y direction. "(s/16)" and "((16-s)/16)" are set based on a ratio of the separated distance "s" between the position of the sub block E6 and the center of the first block E in the Y direction and the separated distance "16-s" between the position of the sub block E6 and the boundary of the first block B in the Y direction.

Then, the feature amount interpolator 44 integrates the result obtained by multiplying the degree of influence in the X direction by the degree of influence in the Y direction that have been obtained for the first blocks D and E on the result obtained by multiplying the degree of influence in the X direction by the degree of influence in the Y direction that have been obtained for the first blocks A and B in accordance with the above-mentioned equation (1). The integrated result is derived as the interpolated feature amount of the sub block E6.

In this manner, when the feature amount of the processing target block exceeds the threshold α, the feature amount interpolator 44 changes the condition relating to the positional relationships between the processing target block and the reference blocks as the standard of the interpolation coefficients in accordance with whether the feature amounts of the reference blocks adjacent to the processing target block are equal to or smaller than the threshold α. The feature amount interpolator 44 changes the condition by switching between a first condition based on the center of the processing target block and the boundaries of the reference blocks and a second condition based on the center of the processing target block and the centers of the reference blocks.

It is to be noted that when the feature amounts of all the reference blocks exceed the threshold α, the feature amount interpolator 44 sets the interpolation coefficients in the X direction and the Y direction based on the center of the processing target block and the centers of the reference blocks so as to interpolate the feature amount of the corresponding sub block by using the interpolation coefficients.

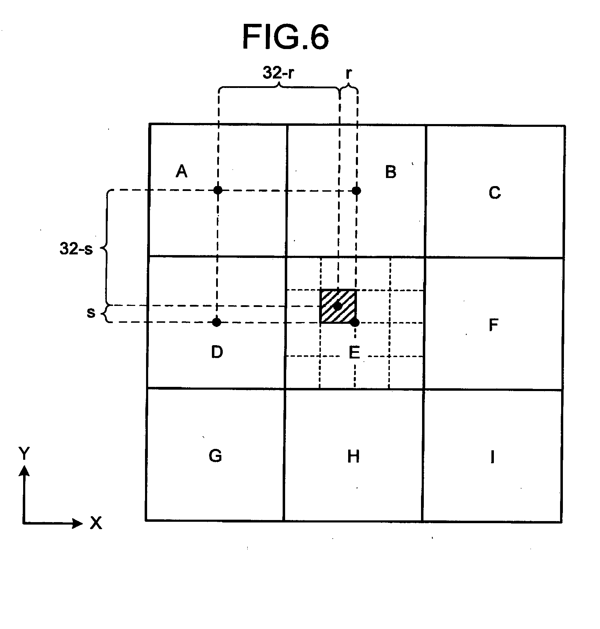

FIG. 6 is a view for explaining another example of the interpolation coefficient setting method that is performed by the feature amount interpolator 44. FIG. 6 illustrates the setting method when the feature amounts of all the reference blocks exceed the threshold α. It is to be noted that in FIG. 6, the interpolation coefficients of the sub block E6 are described in the same manner as FIG. 5 in order to compare with the setting method in FIG. 5.

When the feature amounts of all the reference blocks exceed the threshold α, the feature amount interpolator 44 sets the interpolation coefficients in the X direction and the Y direction based on the positional relationships of the center of the first block E and the centers of the reference blocks relative to the position of the sub block E6. In this case, the feature amount interpolator 44 derives the interpolated feature amount of the sub block E6 by using the following equation (2), for example.

$$\text{Interpolated Feature Amount} = (A*(r/32) + B*((32 - r)/32))*(s/32)$$
$$+ (D*(r/32) + E*((32 - r)/32))*((32 - s)/32) \qquad (2)$$

In the above-mentioned equation (2), "(A*(r/32) + B*((32 - r)/32))" at a first term on a right side indicates the degree of influence of the feature amounts of the first blocks A and B on the sub block E6 in the X direction in the same manner as the above-mentioned equation (1). Furthermore, "(D*(r/32) + E*((32 - r)/32))" at a second term on the right side indicates the degree of influence of the feature amounts of the first blocks D and E on the sub block E6 in the X direction in the same manner as the above-mentioned equation (1). "(r/32)" and "((32 - r)/32)" in the equations indicating the degree of influence in the X direction are interpolation coefficients of components in the X direction. "(r/32)" and "((32 - r)/32)" are set based on a ratio of the separated distance "r" between the position of the sub block E6 and the centers of the first blocks E and B in the X direction and the separated distance "32-r" between the position of the sub block E6 and the centers of the first blocks A and D in the X direction.

Furthermore, "(s/32)" at the first term on the right side indicates the degree of influence of the feature amounts of the first blocks A and B on the sub block E6 in the Y direction. "((32 - s)/32)" at the second term on the right side indicates the degree of influence of the feature amounts of the first blocks D and E on the sub block E6 in the Y direction. "(s/32)" and "((32-s)/32)" are interpolation coefficients of components in the Y direction. "(s/32)" and "((32-s)/32)" are set based on a ratio of the separated distance "s" between the position of the sub block E6 and the centers of the first blocks E and D in the Y direction and the separated distance "32-s" between the position of the sub block E6 and the centers of the first blocks A and B in the Y direction.

Then, the feature amount interpolator 44 integrates the result obtained by multiplying the degree of influence in the X direction by the degree of influence in the Y direction that have been obtained for the first blocks D and E on the result obtained by multiplying the degree of influence in the X direction by the degree of influence in the Y direction that have been obtained for the first blocks A and B in accordance with the above-mentioned equation (2). The integrated result is derived as the interpolated feature amount of the sub block E6.

It is to be noted that the equations to be used for deriving the interpolated feature amount are not limited to the above-mentioned examples and other equations may be used. Furthermore, in the above-mentioned example, a case in which the feature amount of the first block B is equal to or smaller than the threshold $\alpha$ has been described. However, the same processing is performed when a feature amount of another reference block is equal to or smaller than the threshold $\alpha$. For example, when the feature amount of the first block D is equal to or smaller than the threshold $\alpha$, the interpolation coefficient relating to the sub block E6 in the X direction is set based on the center of the first block E and a boundary of the first block D. For example, when the same equation as the above-mentioned equation (1) is used, the interpolation coefficients in the X direction are set to "(r/16)" and "((16-r)/16)" and the interpolation coefficients in the Y direction are set to "(s/32)" and "((32-s)/32)".

Alternatively, when the feature amount of the first block A adjacent to the first block B in the oblique direction is equal to or smaller than the threshold $\alpha$, the interpolation coefficients are set based on a boundary of the first block A and the center of the first block E in both of the X direction and the Y direction. For example, when the same equation as the above-mentioned equation (1) is used, the interpolation coefficients in the X direction are set to "(r/16)" and "((16-r)/16)", and the interpolation coefficients in the Y direction are set to "(s/16)" and "((16-s)/16)".

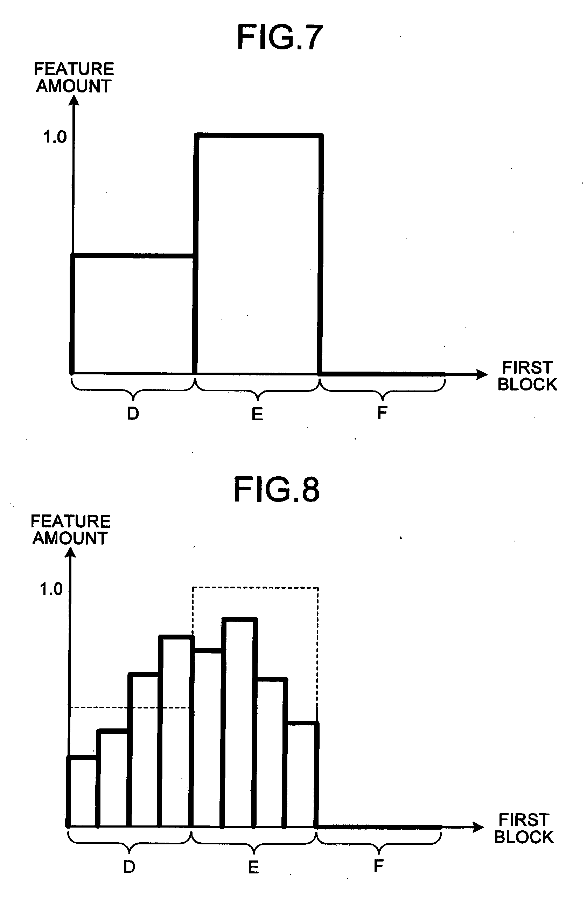

Next, a processing result by the feature amount interpolator 44 is described with reference to FIG. 7 to FIG. 9. FIG. 7 is a graph illustrating an example of the feature amounts calculated by the feature amount calculator 43. The feature amounts of the first blocks D, E, and F present on a center column among the first blocks A to I as illustrated in FIG. 3 to FIG. 6 are illustrated. The horizontal axis indicates the respective first blocks and the vertical axis indicates the feature amount. Furthermore, the threshold $\alpha$ is assumed to be "0.0" as in the above-mentioned example. It is to be noted that the first blocks other than the first blocks D, E, and F are omitted for simplifying explanation.

In the state as illustrated in FIG. 7, the feature amount interpolator 44 sequentially sets the first blocks D, E, and F to processing target blocks. When the first block D is the processing target block, the feature amount of the adjacent reference block (first block E) exceeds the threshold $\alpha$. Therefore, the feature amount interpolator 44 sets the interpolation coefficients based on the center of the first block D and the center of the first block E. Then, the feature amount interpolator 44 interpolates the feature amounts of the sub blocks constituting the first block D by using the interpolation coefficients.

Furthermore, when the first block E is the processing target block, the feature amount of the first block D exceeds the threshold $\alpha$ among the adjacent reference blocks (first blocks D and F). Therefore, the feature amount interpolator 44 sets the interpolation coefficients of the sub blocks at the side of the first block D that constitute the first block E based on the positional relationship between the center of the first block D and the center of the first block E. Then, the feature amount interpolator 44 interpolates the feature amounts by using the interpolation coefficients. Furthermore, the feature amount of the first block F is equal to or smaller than the threshold $\alpha$. Therefore, the feature amount interpolator 44 sets the interpolation coefficients of the sub blocks at the side of the first block F that constitute the first block E based on the center of the first block E and the boundary of the first block F. Then, the feature amount interpolator 44 interpolates the feature amounts by using the interpolation coefficients.

Furthermore, when the first block F is the processing target block, the feature amount of the first block F is equal to or smaller than the threshold $\alpha$. Therefore, the feature amount interpolator 44 excludes the first block F from the processing targets so as to keep the feature amount of the first block F.

As a result of the above-mentioned interpolation processing, the feature amounts of the first blocks D and E are interpolated on the sub block basis (see FIG. 8). FIG. 8 is a graph illustrating an interpolation result of the feature amounts as illustrated in FIG. 7 by the feature amount interpolator 44. In FIG. 8, a case in which each first block is divided into 16 sub blocks is supposed in the same manner as the above-mentioned example, and feature amounts (interpolated feature amounts) of four sub blocks on the same line aligned in the X direction are illustrated.

When focusing on the feature amount of the first block E, change of the feature amounts from the first block E to the first block D is moderated and change of the feature amounts from the first block E to the first block F is moderated in comparison with the state of the first block E as illustrated in FIG. 7. In addition, the feature amount of the first block F is kept to be a value that is the same as that in FIG. 7.

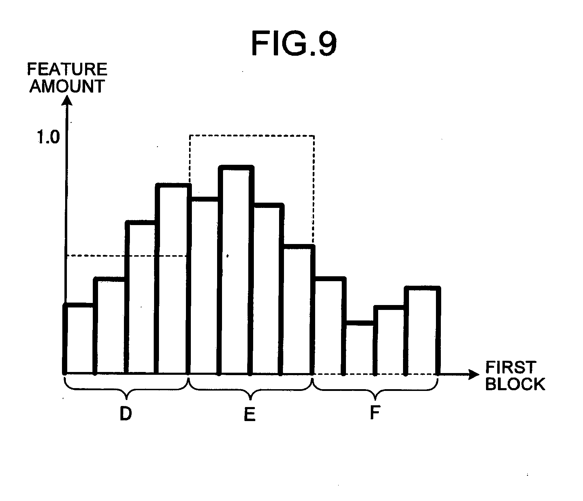

On the other hand, in the state as illustrated in FIG. 7, if the feature amounts of the respective sub blocks of the first blocks D, E, and F are interpolated by using the interpolation coefficients determined based on the positional relationships between the centers of the processing target blocks and the centers of the reference blocks without taking the threshold $\alpha$ into consideration, a processing result thereof corresponds to a state as illustrated in FIG. 9, for example. The interpolation method corresponds to a conventional interpolation method that is performed commonly.

FIG. 9 is a graph illustrating the interpolation result of the feature amounts with the conventional interpolating method. It is to be noted that FIG. 9 illustrates a result obtained by correcting the feature amounts of the first blocks as illustrated in FIG. 7.

When focusing on the feature amount of the first block E, the difference of the feature amounts between the first blocks D and F is moderated. However, the interpolation processing that is the same processing for the first blocks D and E is also performed for the first block F. Therefore, the feature amount of the first block F that has been "0.0" originally is influenced by the adjacent first block E so as to be converted to a value that exceeds "0.0". Furthermore, on the processing result as illustrated in FIG. 9, the interpolation is performed for all the sub blocks of the first block E by using the interpolation coefficients determined based on the centers of the respective first blocks. Therefore, the feature amounts (interpolated feature amounts) of the sub blocks present at the side of the first block F in FIG. 9 are larger values in comparison with the interpolated feature amounts of the sub blocks at the positions same as those in FIG. 8.

Thus, in the conventional interpolating method as illustrated in FIG. 9, the interpolation processing is executed by using the same interpolation coefficients for all the first blocks regardless of the values of the feature amounts. Therefore, in the case of the first block of which feature amount is extremely smaller than the adjacent first block like the first block F, for example, the first block is influenced largely by the adjacent first block, so that the feature amount thereof is increased undesirably. In this case, with the blending processing by the blend processor 48, which will be described later, there arises a possibility that artifact noise is generated on an image portion corresponding to the first block of which feature amount has been increased undesirably. Therefore, this arises a problem that the artifact noise becomes a factor of deterioration of image quality.

In contrast, when the feature amount of the processing target block is equal to or smaller than the threshold $\alpha$, the feature amount interpolator 44 in the embodiment keeps the feature amount thereof as it is. When the feature amount of the processing target block exceeds the threshold $\alpha$, the feature amount interpolator 44 changes the condition relating to the positional relationship between the processing target block and the reference block as a standard of the interpolation coefficients in accordance with whether the feature amount of the adjacent reference block is equal to or smaller than the threshold $\alpha$. Then, the feature amount interpolator 44 interpolates the feature amounts by using the interpolation coefficients. As illustrated in FIG. 8, the difference of the feature amounts between the adjacent first blocks can be moderated while keeping the feature amount of the first block of which feature amount is equal to or smaller than the threshold $\alpha$. Therefore, the above-mentioned problem can be solved.

Returning to FIG. 2, the movement amount calculator 45 calculates a movement amount relating to a contracted image on the present frame from a plurality of contracted images that have been generated by the contracted image generator 42 and are continuous temporally for each predetermined second block constituting the contracted image. To be more specific, the movement amount calculator 45 calculates a movement amount between the contracted image on the present frame and the contracted image on the previous frame for each second block based on a moving vector amount of the contracted image that has been extracted by moving vector search. Note that the size of the second block is not limited particularly and an arbitrary value such as $8 \times 8$ pixels, for example, can be employed. The size of the second block is preferably set to a size that is an integral multiple (alternatively, the specified fraction of the integer) of the above-mentioned first block. It is to be noted that the moving vector search and derivation of the movement amount are performed by using known techniques.

The movement amount corrector 46 calculates information (movement amount adaptive confidence) indicating the adaption degree by the high-quality image processor 47 in accordance with the movement amount of each block that has been calculated by the movement amount calculator 45. Furthermore, by using the calculated movement amount adaptive confidence, the movement amount corrector 46 corrects movement amount adaptive confidence of the block that corresponds to the movement amount adaptive confidence.

The movement amount corrector 46 calculates such that, for example, as the movement amount is larger, the movement amount adaptive confidence is lower, and as the movement amount is smaller, the movement amount adaptive confidence is higher. It is to be noted that the movement amount adaptive confidence calculating method is not limited particularly and a known technique can be used.

The high-quality image processor 47 performs image processing (high-quality image processing) for making image quality higher, such as super-resolution processing and noise reduction processing, on the enlarged image generated by the enlarged image generator 41. It is to be noted that the processing contents of the high-quality image processing is not limited to the above-mentioned contents and another processing may be performed.

The blend processor 48 blends the image on which processing has been performed by the high-quality image processor 47 on the enlarged image generated by the enlarged image generator 41 so as to generate a high-quality image. To be more specific, the blend processor 48 blends the above-mentioned image at an intensity in accordance with the movement amount adaptive confidences for the respective second blocks that have been processed by the movement amount corrector 46 and the feature amounts (interpolated feature amounts) of the respective first blocks that have been processed by the feature amount interpolator 44.

Based on the movement amount adaptive confidences and the feature amounts of blocks corresponding to the same regions among the first blocks and the second blocks based on which pieces of processing by the feature amount interpolator 44 and the movement amount corrector 46 are performed, the blend processor 48 blends images corresponding to the regions. It is to be noted that the blending processing method is not limited particularly and a known technique can be used.

Then, the blend processor 48 outputs the generated high-quality image for each frame to the synthesis processor 16 as a digital video image signal. The digital video image signal of which image quality has been made higher is thus displayed on the display 30.

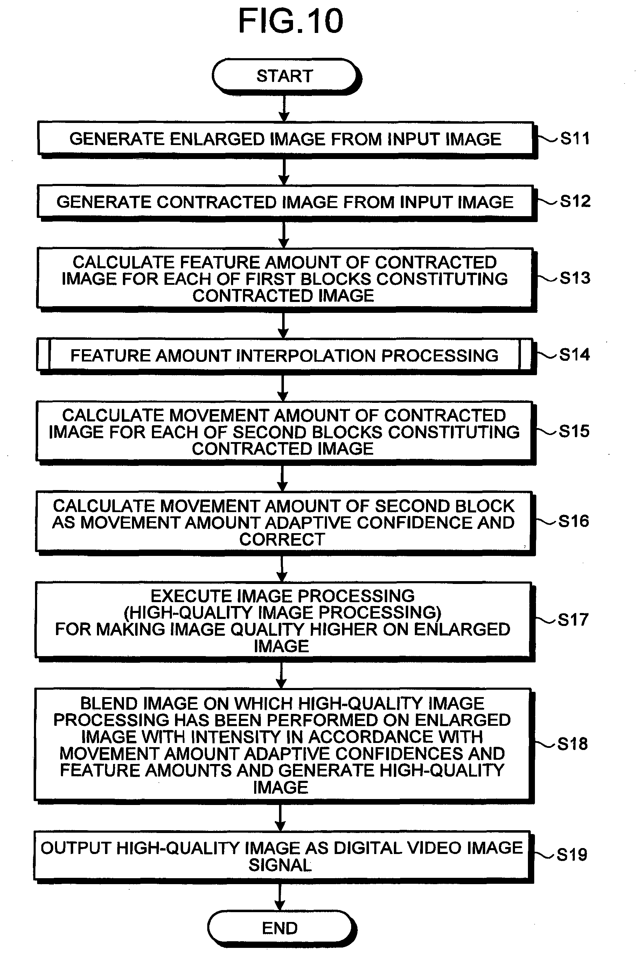

Next, operations of the television device 100 according to the embodiment are described. FIG. 10 is a flowchart illustrating a procedure of image processing that is performed by the image processor 151.

First, if an input image for each frame is input to the signal processor 15 from the demodulator/decoder 14, the enlarged image generator 41 sequentially generates an enlarged image obtained by enlarging a size of the input image to a predetermined enlarged size (S11). Furthermore, the contracted image generator 42 sequentially generates a contracted image obtained by contracting the input image to a predetermined contracted size (S12).

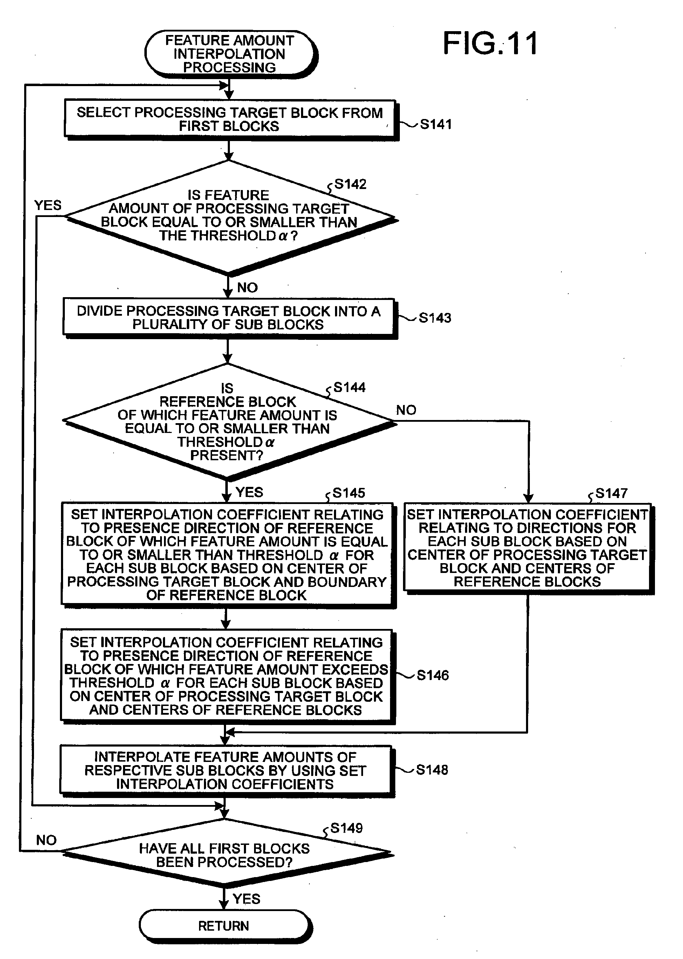

The feature amount calculator 43 calculates a feature amount of the contracted image from the contracted image generated by the contracted image generator 42 for each of the first blocks (S13). Subsequently, the feature amount interpolator 44 executes feature amount interpolation processing based on the feature amount for each first block that has been calculated by the feature amount calculator 43 (S14). Hereinafter, the feature amount interpolation processing at S14 is described with reference to FIG. 11.

FIG. 11 is a flowchart illustrating a procedure of the feature amount interpolation processing. First, the feature amount interpolator 44 selects a processing target block from first blocks constituting the contracted image (S141). Then, the feature amount interpolator 44 determines whether the feature amount of the processing target block is equal to or smaller than the threshold $\alpha$ (S142). When the feature amount of the processing target block is equal to or smaller than the threshold $\alpha$ (Yes at S142), the process proceeds to S149 immediately. On the other hand, when the feature amount of the processing target block exceeds the threshold $\alpha$ (No at S142), the feature amount interpolator 44 divides the processing target block into a plurality of sub blocks (S143).

Subsequently, the feature amount interpolator 44 determines whether a reference block of which feature amount is equal to or smaller than the threshold $\alpha$ is present among reference blocks adjacent to the processing target block (S144). When the reference block of which feature amount is equal to or smaller than the threshold $\alpha$ is present (Yes at S144), the feature amount interpolator 44 sets an interpolation coefficient relating to the presence direction of the reference block for each sub block based on the center of the processing target block and the boundary of the reference block (S145). Furthermore, when a reference block of which feature amount exceeds the threshold $\alpha$ is present in the direction other than the direction in which the interpolation coefficient has been obtained at S145, the interpolation coefficient relating to the presence direction of the reference block is set for each sub block based on the center of the processing target block and the center of the reference block (S146). Then, the process proceeds to S148.

On the other hand, when the feature amounts of all the reference blocks exceed the threshold $\alpha$ at S144 (No at S144), the feature amount interpolator 44 sets the interpolation coefficients relating to the directions based on the center of the processing target block and the centers of the reference blocks for each sub block (S147). Then, the process proceeds to S148.

The feature amount interpolator 44 interpolates the feature amounts of the respective sub blocks by using the interpolation coefficients set at S145 to S147 (S148). It is to be noted that the interpolation coefficients of the sub blocks are set by using the reference blocks in the directions corresponding to arrangement positions of the sub blocks as described with reference to FIG. 4.

Subsequently, the feature amount interpolator 44 determines whether all the first blocks have been set to processing target blocks and when the unprocessed block is present (No at S149), the process returns to the processing at S141, again. Then, the unprocessed block is selected as the processing target block. Furthermore, when all the blocks have been set to the processing target blocks (Yes at S149), the process proceeds to the processing at S15 in FIG. 10.

Returning to FIG. 10, the movement amount calculator 45 calculates a movement amount of the contracted image on the present frame for each of the predetermined second blocks from the contracted images for a plurality of frames that have been generated by the contracted image generator 42 and are continuous temporally (S15). Furthermore, the movement amount corrector 46 calculates and corrects the adaptive confidence for the movement amount of each second block (S16).

Subsequently, the high-quality image processor 47 performs the image processing (high-quality image processing) for making image quality higher, such as the super-resolution processing and the noise reduction processing, on the enlarged image generated by the enlarged image generator 41 (S17).

The blend processor 48 blends the image on which processing has been performed by the high-quality image processor 47 on the enlarged image generated by the enlarged image generator 41 at an intensity in accordance with the movement amount adaptive confidences processed by the movement amount corrector 46 and the feature amounts (interpolated feature amounts) processed by the feature amount interpolator 44 so as to generate a high-quality image (S18). Then, the blend processor 48 outputs the generated high-quality image for each frame to the synthesis processor 16 as the digital video image signal (S19). With this, the processing is finished.

As described above, according to the embodiment, the high-quality image is generated by using the feature amounts interpolated by the above-mentioned feature amount interpolator 44. The high-quality image can be thus generated in a state where a generation factor of artifact noise is reduced. Therefore, image quality can be made higher.

For example, in the above-mentioned embodiment, the feature amount at each position of a processing target block is interpolated for each sub block. However, the feature amount may be interpolated for each pixel.

Furthermore, in the above-mentioned embodiment, in order to reduce load of the processing relating to calculation of the feature amounts and the movement amounts, the contracted image is generated from the input image and the processing is performed on the contracted image. However, the invention is not limited thereto and the processing may be performed on the input image or the enlarged image.

Furthermore, in the above-mentioned embodiment, an example in which the invention is applied to the television device 100 has been described. However, a device to which the invention is applied is not limited to the television device 100. For example, the invention may be applied to information processing devices such as a set-top box, a recording and reproducing device, and a personal computer (PC) that can receive a broadcast signal.

In addition, functional parts (enlarged image generator 41, contracted image generator 42, movement amount calculator 45, movement amount corrector 46, feature amount calculator 43, feature amount interpolator 44, high-quality image processor 47, blend processor 48) comprised by the signal processor 15 in the above-mentioned embodiment may be hardware configurations that are realized by an integrated circuit such as an application specific integrated circuit (ASIC) or may be software configurations that are realized by operating a processor such as a CPU and computer programs stored in a predetermined storage medium in combination.

When the functional parts of the signal processor 15 are realized by the software configurations, the programs are provided by being incorporated in a storage medium (the ROM 212, the HDD 27, or the like) comprised in the television device 100 previously. However, the invention is not limited thereto and the programs may be configured to be provided by being recorded in a computer-readable storage medium, such as a flexible disk (FD) and the optical disk 26, with a file in a format that can be installed or a format that can be executed.

Furthermore, the storage medium is not limited to a medium that is independent of a computer or an incorporated system and also includes a storage medium that downloads computer programs transmitted through the LAN or the Internet and stores or temporarily stores therein the programs. In addition, the programs may be configured to be provided by being stored on a computer connected to network such as the Internet and being downloaded through the network. Alternatively, the programs may be configured to be provided or distributed through network such as the Internet.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the invention which is defined by the appended claims.

**Claims**

1. An image processing device (100) comprising:

a feature amount calculating module (43) configured to calculate a feature amount indicating features of an input image for each of first blocks of pixels constituting the input image, the feature amount corresponding to a fluctuation degree of pixel values between adjacent pixels of each of the first blocks;
a determining module (44) configured to sequentially select a processing target block as a processing target from the first blocks to determine whether the feature amount of the processing target block is equal to or smaller than a predetermined threshold; and
a feature amount interpolating module (44) configured to interpolate, when the determining module determines that the feature amount of the processing target block exceeds the threshold, feature amounts at respective positions within the processing target block by using an interpolation coefficient, and not to interpolate, when the determining module determines that the feature amount of the processing target block does not exceed the threshold, the feature amounts at the respective positions within the processing target block by using the interpolation coefficient, wherein
the interpolation coefficient is based on a positional relationship between the processing target block and an adjacent block adjacent to the processing target block, and
the feature amount interpolating module changes a condition of the positional relationship as a standard of the interpolation coefficient in accordance with whether the feature amount of the adjacent block is exceeding the threshold or not, the change resulting in employing different separated distances for computing the interpolation coefficient between each respective processing target block and each respective adjacent block in accordance with whether the feature amount of the adjacent block is exceeding the threshold or not.

2. The image processing device (100) of Claim 1, wherein the feature amount interpolating module (44) is configured to interpolate the feature amounts at the respective positions of the processing target block by using the interpolation coefficient based on a center of the processing target block and a boundary of the adjacent block when the feature amount of the adjacent block is equal to or smaller than the threshold.

3. The image processing device (100) of Claim 1 or 2, wherein the feature amount interpolating module (44) is configured to interpolate the feature amounts at the respective positions of the processing target block by using the interpolation coefficient based on the center of the processing target block and a center of the adjacent block when the feature amount of the adjacent block exceeds the threshold.

4. The image processing device (100) of any one of Claims 1 to 3, wherein the feature amount interpolating module (44) is configured to determine the interpolation coefficient in accordance with the feature amount of the adjacent block in each predetermined direction in which the adjacent block is present.

5. The image processing device (100) of any one of Claims 1 to 4, wherein the feature amount interpolating module (44) is configured to divide the processing target block into a plurality of sub blocks to interpolate the feature amount for each of the sub blocks.

6. The image processing device (100) of Claim 5, wherein the feature amount interpolating module (44) is configured to determine the correction coefficient of each of the sub blocks by using the adjacent block in a direction corresponding to an arrangement position of the each of the sub blocks in the processing target block.

7. The image processing device (100) of any one of Claims 1 to 6, further comprising a contracted image generating module (42) configured to generate a contracted image obtained by contracting the input image to a predetermined contracted size, wherein
the feature amount calculating module (43) is configured to calculate the feature amount for each of the first blocks constituting the contracted image as an input image.

8. The image processing device (100) of Claim 7, further comprising:

a movement amount calculating module (45) configured to calculate a movement amount of the contracted image for each of a plurality of second blocks constituting the contracted image;
a movement amount correcting module (46) configured to calculate a movement amount adaptive confidence in accordance with the movement amount for each of the second blocks from the movement amount to correct the movement amount adaptive confidence;

an enlarged image generating module (41) configured to generate an enlarged image obtained by enlarging the input image to a predetermined enlarged size;

an image processing module (47) configured to perform predetermined image processing on the enlarged image; and

a blending module (48) configured to blend an image on which the image processing has been performed by the image processing module on the enlarged image generated by the enlarged image generating module at an intensity in accordance with the feature amount for each of the first blocks that has been processed by the feature amount interpolating module (44) and the movement amount adaptive confidence for each of the second blocks that has been processed by the movement amount correcting module (45).

9. An image processing method comprising:

calculating, by a feature amount calculating module (43), a feature amount indicating features of an input image for each of a plurality of first blocks of pixels constituting the input image, the feature amount corresponding to a fluctuation degree of pixel values between adjacent pixels of each of the first blocks;

sequentially selecting, by a determining module (44), a processing target block as a processing target from the first blocks to determine whether the feature amount of the processing target block is equal to or smaller than a predetermined threshold; and

interpolating, by a feature amount interpolating module (44), when the determining module determines that the feature amount of the processing target block exceeds the threshold, feature amounts at respective positions within the processing target block by using an interpolation coefficient, and not interpolating, when the determining module determines that the feature amount of the processing target block does not exceed the threshold, the feature amounts at the respective positions within the processing target block by using the interpolation coefficient, wherein

the interpolation coefficient is based on a positional relationship between the processing target block and an adjacent block adjacent to the processing target block, and

at the interpolating, a condition of the positional relationship as a standard of the interpolation coefficient is changed in accordance with whether the feature amount of the adjacent block is exceeding the threshold or not, the change resulting in employing different separated distances for computing the interpolation coefficient between each respective processing target block and each respective adjacent block in accordance with whether the feature amount of the adjacent block is exceeding the threshold or not.

## Patentansprüche

1. Bildverarbeitungsvorrichtung (100), aufweisend:

ein Merkmalsmenge-Berechnungsmodul (43), das konfiguriert ist, um eine Merkmalsmenge, die Merkmale eines Eingabebildes anzeigt, für jeden von ersten Blöcken von Bildpunkten, die das Eingabebild bilden, zu berechnen, wobei die Merkmalsmenge zu einem Fluktuationsgrad von Bildpunktwerten zwischen benachbarten Bildpunkten von jedem der ersten Blöcke korrespondiert,

ein Bestimmungsmodul (44), das konfiguriert ist, um einen Verarbeitungszielblock als ein Verarbeitungsziel aus den ersten Blöcken sequentiell auszuwählen, um zu bestimmen, ob die Merkmalsmenge des Verarbeitungszielblocks gleich oder kleiner als ein vorbestimmter Schwellenwert ist, und

ein Merkmalsmenge-Interpolationsmodul (44), das konfiguriert ist, um Merkmalsmengen an jeweiligen Positionen innerhalb des Verarbeitungszielblocks unter Verwendung eines Interpolationskoeffizienten zu interpolieren, wenn das Bestimmungsmodul bestimmt, dass die Merkmalsmenge des Verarbeitungszielblocks den Schwellenwert übersteigt, und um die Merkmalsmengen an den jeweiligen Positionen innerhalb des Verarbeitungszielblocks unter Verwendung des Interpolationskoeffizienten nicht zu interpolieren, wenn das Bestimmungsmodul bestimmt, dass die Merkmalsmenge des Verarbeitungszielblocks den Schwellenwert nicht übersteigt, wobei

der Interpolationskoeffizient auf einem Positionsverhältnis zwischen dem Verarbeitungszielblock und einem benachbarten Block, der dem Verarbeitungszielblock benachbart ist, basiert, und

das Merkmalsmenge-Interpolationsmodul eine Bedingung des Positionsverhältnisses als einen Standard des Interpolationskoeffizienten gemäß der Bestimmung ändert, ob die Merkmalsmenge des benachbarten Blocks den Schwellenwert übersteigt oder nicht, wobei die Änderung, die im Verwenden von unterschiedlichen getrennten Entfernungen zum Berechnen des Interpolationskoeffizienten zwischen jedem jeweiligen Verarbeitungszielblock und jedem jeweiligen benachbarten Block gemäß der Bestimmung resultiert, ob die Merkmalsmenge des benachbarten Blocks den Schwellenwert übersteigt oder nicht.

2. Bildverarbeitungsvorrichtung (100) nach Anspruch 1, wobei das Merkmalsmenge-Interpolationsmodul (44) konfiguriert ist, um die Merkmalsmengen an den jeweiligen Positionen des Verarbeitungszielblocks unter Verwendung des Interpolationskoeffizienten basierend auf einem Zentrum des Verarbeitungszielblocks und einer Grenze des benachbarten Blocks zu interpolieren, wenn die Merkmalsmenge des benachbarten Blocks gleich oder kleiner als der Schwellenwert ist.

3. Bildverarbeitungsvorrichtung (100) nach Anspruch 1 oder 2, wobei das Merkmalsmenge-Interpolationsmodul (44) konfiguriert ist, um die Merkmalsmengen an den jeweiligen Positionen des Verarbeitungszielblocks unter Verwendung des Interpolationskoeffizienten basierend auf dem Zentrum des Verarbeitungszielblocks und einem Zentrum des benachbarten Blocks zu interpolieren, wenn die Merkmalsmenge des benachbarten Blocks den Schwellenwert übersteigt.

4. Bildverarbeitungsvorrichtung (100) nach einem der Ansprüche 1 bis 3, wobei das Merkmalsmenge-Interpolationsmodul (44) konfiguriert ist, um den Interpolationskoeffizienten gemäß der Merkmalsmenge des benachbarten Blocks in jeder vorbestimmten Richtung, in welcher der benachbarte Block vorliegt, zu bestimmen.

5. Bildverarbeitungsvorrichtung (100) nach einem der Ansprüche 1 bis 4, wobei das Merkmalsmenge-Interpolationsmodul (44) konfiguriert ist, um den Verarbeitungszielblock in eine Vielzahl von Unterblöcken aufzuteilen, um die Merkmalsmenge für jeden der Unterblöcke zu interpolieren.

6. Bildverarbeitungsvorrichtung (100) nach Anspruch 5, wobei das Merkmalsmenge-Interpolationsmodul (44) konfiguriert ist, um den Korrekturkoeffizienten von jedem der Unterblöcke unter Verwendung des benachbarten Blocks in einer Richtung, die zu einer Anordnungsposition jedes der Unterblöcke in dem Verarbeitungszielblock korrespondiert, zu bestimmen.

7. Bildverarbeitungsvorrichtung (100) nach einem der Ansprüche 1 bis 6, ferner mit einem Erzeugungsmodul für ein verkleinertes Bild (42), das konfiguriert ist, um ein verkleinertes Bild zu erzeugen, das durch Verkleinern des Eingabebilds auf eine vorbestimmte Verkleinerungsgröße erhalten ist, wobei das Merkmalsmenge-Berechnungsmodul (43) konfiguriert ist, um die Merkmalsmenge für jeden der ersten Blöcke, die das verkleinerte Bild als ein Eingabebild bilden, zu berechnen.

8. Bildverarbeitungsvorrichtung (100) nach Anspruch 7, ferner aufweisend:

ein Bewegungsgröße-Berechnungsmodul (45), das konfiguriert ist, um eine Bewegungsgröße des verkleinerten Bildes für jeden einer Vielzahl von zweiten Blöcken, die das verkleinerte Bild bilden, zu berechnen,
ein Bewegungsgröße-Korrekturmodul (46), das konfiguriert ist, um ein adaptives Vertrauen für eine Bewegungsgröße gemäß der Bewegungsgröße für jeden der zweiten Blöcke aus der Bewegungsgröße zu berechnen, um das adaptive Vertrauen für die Bewegungsgröße zu korrigieren,
ein Erzeugungsmodul für ein vergrößertes Bild (41), das konfiguriert ist, um ein vergrößertes Bild zu erzeugen, das durch Vergrößern des Eingabebildes auf eine vorbestimmte Vergrößerungsgröße erhalten ist,
ein Bildverarbeitungsmodul (47), das konfiguriert ist, um eine vorbestimmte Bildverarbeitung bezüglich des vergrößerten Bildes durchzuführen, und
ein Mischmodul (48), das konfiguriert ist, um ein Bild, bezüglich welchem die Bildverarbeitung durch das Bildverarbeitungsmodul durchgeführt worden ist, bezüglich des vergrößerten Bilds, das durch das Erzeugungsmodul für ein vergrößertes Bild erzeugt ist, mit einer Intensität gemäß der Merkmalsmenge für jeden der ersten Blöcke, die durch das Merkmalsmenge-Interpolationsmodul (44) verarbeitet worden ist, und dem adaptiven Vertrauen für eine Bewegungsgröße für jeden der zweiten Blöcke, die durch das Bewegungsgröße-Korrekturmodul (45) verarbeitet worden ist, zu mischen.

9. Bildverarbeitungsverfahren, aufweisend:

Berechnen, durch ein Merkmalsmenge-Berechnungsmodul (43), einer Merkmalsmenge, die Merkmale eines Eingabebildes anzeigt, für jeden einer Vielzahl von ersten Blöcken von Bildpunkten, die das Eingabebild bilden, wobei die Merkmalsmenge zu einem Fluktuationsgrad von Bildpunktwerten zwischen benachbarten Bildpunkten von jedem der ersten Blöcke korrespondiert,

sequentielles Auswählen, durch ein Bestimmungsmodul (44), eines Verarbeitungszielblocks als ein Verarbeitungsziel aus den ersten Blöcken, um zu bestimmen, ob die Merkmalsmenge des Verarbeitungszielblocks gleich oder kleiner als ein vorbestimmter Schwellenwert ist, und

Interpolieren, durch ein Merkmalsmenge-Interpolationsmodul (44), von Merkmalsmengen an jeweiligen Positionen innerhalb des Verarbeitungszielblocks unter Verwendung eines Interpolationskoeffizienten, wenn das Bestimmungsmodul bestimmt, dass die Merkmalsmenge des Verarbeitungszielblocks den Schwellenwert übersteigt, und Nicht-Interpolieren der Merkmalsmengen an den jeweiligen Positionen innerhalb des Verarbeitungszielblocks unter Verwendung des Interpolationskoeffizienten, wenn das Bestimmungsmodul bestimmt, dass die Merkmalsmenge des Verarbeitungszielblocks den Schwellenwert nicht übersteigt, wobei

der Interpolationskoeffizient auf einer Positionsbeziehung zwischen dem Verarbeitungszielblock und einem benachbarten Block, der dem Verarbeitungszielblock benachbart ist, basiert, und

bei dem Interpolieren, eine Bedingung des Positionsverhältnisses als einen Standard des Interpolationskoeffizienten gemäß der Bestimmung geändert wird, ob die Merkmalsmenge des benachbarten Blocks den Schwellenwert übersteigt oder nicht, wobei die Änderung im Verwenden unterschiedlicher separater Entfernungen resultiert, um den Interpolationskoeffizienten zwischen jedem jeweiligen Verarbeitungszielblock und jedem jeweiligen benachbarten Block gemäß der Bestimmung zu berechnen, ob die Merkmalsmenge des benachbarten Blocks den Schwellenwert übersteigt oder nicht.

## Revendications

1. Dispositif de traitement d'image (100) comprenant :

un module de calcul de quantité caractéristique (43) configuré pour calculer une quantité caractéristique indiquant les caractéristiques d'une image d'entrée pour chacun des premiers blocs de pixels constituant l'image d'entrée, la quantité caractéristique correspondant au degré de fluctuation des quantités de pixels entre pixels adjacents de chacun des premiers blocs ;

un module de détermination (44) configuré pour sélectionner en séquence à partir des premiers blocs un bloc cible de traitement en tant que cible de traitement pour déterminer si la quantité caractéristique du bloc cible de traitement est inférieure ou égale à un seuil prédéterminé ; et

un module d'interpolation de quantités caractéristiques (44) configuré pour interpoler, lorsque le module de détermination détermine que la quantité caractéristique du bloc cible de traitement dépasse le seuil, des quantités caractéristiques dans des positions respectives dans le bloc cible de traitement en utilisant un coefficient d'interpolation, et ne pas interpoler, lorsque le module de détermination détermine que la quantité caractéristique du bloc cible de traitement ne dépasse pas le seuil, les quantités caractéristiques dans les positions respectives dans le bloc cible de traitement en utilisant le coefficient d'interpolation, dans lequel

le coefficient d'interpolation est fondé sur une relation de position entre le bloc cible de traitement et un bloc adjacent, adjacent au bloc cible de traitement, et

le module d'interpolation de quantités caractéristiques modifie la condition de la relation de position en tant que norme du coefficient d'interpolation en fonction du fait que la quantité caractéristique du bloc adjacent dépasse ou non le seuil, la modification ayant pour conséquence l'utilisation de distances séparées différentes pour calculer le coefficient d'interpolation entre chaque bloc cible de traitement respectif et chaque bloc adjacent respectif en fonction du fait que la quantité caractéristique du bloc adjacent dépasse ou non le seuil.

2. Dispositif de traitement d'image (100) selon la revendication 1, dans lequel le module d'interpolation de quantités caractéristiques (44) est configuré pour interpoler les quantités caractéristiques dans les positions respectives du bloc cible de traitement en utilisant le coefficient d'interpolation en se basant sur le centre du bloc cible de traitement et la limite du bloc cible de traitement lorsque la quantité caractéristique du bloc adjacent est inférieure ou égale au seuil.

3. Dispositif de traitement d'image (100) selon la revendication 1 ou 2, dans lequel le module d'interpolation de quantités caractéristiques (44) est configuré pour interpoler les quantités caractéristiques dans les positions respectives du bloc cible de traitement en utilisant le coefficient d'interpolation en se basant sur le centre du bloc cible de traitement et le centre du bloc adjacent lorsque la quantité caractéristique du bloc adjacent dépasse le seuil.

4. Dispositif de traitement d'image (100) selon l'une quelconque des revendications 1 à 3, dans lequel le module d'interpolation de quantités caractéristiques (44) est configuré pour déterminer le coefficient d'interpolation en fonction de la quantité caractéristique du bloc adjacent dans chaque direction prédéterminée dans laquelle est présent

**EP 2 667 351 B1**

le bloc adjacent.

5. Dispositif de traitement d'image (100) selon l'une quelconque des revendications 1 à 4, dans lequel le module d'interpolation de quantités caractéristiques (44) est configuré pour diviser le bloc cible de traitement en une pluralité de sous-blocs pour interpoler la quantité caractéristique pour chacun des sous-blocs.

6. Dispositif de traitement d'image (100) selon la revendication 5, dans lequel le module d'interpolation de quantités caractéristiques (44) est configuré pour déterminer le coefficient de correction de chacun des sous-blocs en utilisant le bloc adjacent dans une direction correspondant à la position d'agencement de chacun des sous-blocs dans le bloc cible de traitement.

7. Dispositif de traitement d'image (100) selon l'une quelconque des revendications 1 à 6, comprenant en outre un module de génération d'image réduite (42) configuré pour générer une image réduite obtenue en réduisant l'image d'entrée à une taille réduite prédéterminée, dans lequel
le module de calcul de quantité caractéristique (43) est configuré pour calculer la quantité caractéristique pour chacun des premiers blocs constituant l'image réduite en tant qu'image d'entrée.

8. Dispositif de traitement d'image (100) selon la revendication 7, comprenant en outre :

un module de calcul de quantité de mouvement (45) configuré pour calculer la quantité de mouvement de l'image réduite pour chaque bloc d'une pluralité de seconds blocs constituant l'image réduite ;
un module de correction de quantité de mouvement (46) configuré pour calculer une confiance adaptative de quantité de mouvement en fonction de la quantité de mouvement pour chacun des seconds blocs d'après la quantité de mouvement pour corriger la confiance adaptative de quantité de mouvement ;
un module générateur d'image agrandie (41) configuré pour générer une image agrandie obtenue en agrandissant l'image d'entrée à une taille agrandie prédéterminée ;
un module de traitement d'image (47) configuré pour effectuer un traitement d'image prédéterminée sur l'image agrandie ; et
un module de mélange (48) configuré pour mélanger une image sur laquelle le traitement d'image a été effectué par le module de traitement d'image avec l'image agrandie générée par le module de génération d'image agrandie à une intensité fonction de la quantité caractéristique pour chacun des premiers blocs ayant été traités par le module d'interpolation de quantités caractéristiques (44) et la confiance adaptative de quantité de mouvement pour chaque bloc des seconds blocs ayant été traités par le module de correction de quantité de mouvement (45).

9. Procédé de traitement d'image comprenant :

le calcul, au moyen d'un module de calcul de quantité caractéristique (43), d'une quantité caractéristique indiquant les caractéristiques d'une image d'entrée pour chaque bloc des premiers blocs de pixels constituant l'image d'entrée, la quantité caractéristique correspondant au degré de fluctuation des quantités de pixels entre pixels adjacents de chacun des premiers blocs ;
la sélection en séquence à partir des premiers blocs, au moyen d'un module de détermination (44), d'un bloc cible de traitement en tant que cible de traitement pour déterminer si la quantité caractéristique du bloc cible de traitement est inférieure ou égale à un seuil prédéterminé ; et
l'interpolation, au moyen d'un module d'interpolation de quantités caractéristiques (44), lorsque le module de détermination détermine que la quantité caractéristique du bloc cible de traitement dépasse le seuil, des quantités caractéristiques dans des positions respectives dans le bloc cible de traitement en utilisant un coefficient d'interpolation, et l'absence d'interpolation, lorsque le module de détermination détermine que la quantité caractéristique du bloc cible de traitement ne dépasse pas le seuil, des quantités caractéristiques dans les positions respectives dans le bloc cible de traitement en utilisant le coefficient d'interpolation, dans lequel
le coefficient d'interpolation est fondé sur une relation de position entre le bloc cible de traitement et un bloc adjacent, adjacent au bloc cible de traitement, et
lors de l'interpolation, la condition de la relation de position en tant que norme du coefficient d'interpolation est modifiée en fonction du fait que la quantité caractéristique du bloc adjacent dépasse ou non le seuil, la modification ayant pour conséquence l'utilisation de distances séparées différentes pour calculer le coefficient d'interpolation entre chaque bloc cible de traitement respectif et chaque bloc adjacent respectif en fonction du fait que la quantité caractéristique du bloc adjacent dépasse ou non le seuil.

**15**

FIG.1

# FIG.2

INPUT IMAGE

151

| CONTRACTED IMAGE GENERATOR | 42 |
|---|---|

ENLARGED IMAGE GENERATOR  41

FEATURE AMOUNT CALCULATOR  43

MOVEMENT AMOUNT CALCULATOR  45

FEATURE AMOUNT INTERPOLATOR  44

MOVEMENT AMOUNT CORRECTOR  46

HIGH-QUALITY IMAGE PROCESSOR  47

BLEND PROCESSOR  48

HIGH-QUALITY IMAGE

# FIG.3

| | | |
|---|---|---|
| A<br><br>(0.3) | B<br><br>(0.0) | C<br><br>(0.1) |
| D<br><br>(0.5) | E<br><br>(1.0) | F<br><br>(0.0) |
| G<br><br>(0.2) | H<br><br>(0.7) | I<br><br>(0.2) |

Y
↑
→ X

# FIG.4

A    B    C

E1  E2  E3  E4
E5  E6  E7  E8
E
E9  E10  E11  E12
E13  E14  E15  E16

D    F

G    H    I

Y
↑
→ X

# FIG.5

# FIG.6

# FIG.7

FEATURE
AMOUNT

1.0

FIRST
BLOCK

D          E          F

# FIG.8

FEATURE
AMOUNT

1.0

FIRST
BLOCK

D          E          F

# FIG.9

# FIG.10

START

GENERATE ENLARGED IMAGE FROM INPUT IMAGE — S11

GENERATE CONTRACTED IMAGE FROM INPUT IMAGE — S12

CALCULATE FEATURE AMOUNT OF CONTRACTED IMAGE FOR EACH OF FIRST BLOCKS CONSTITUTING CONTRACTED IMAGE — S13

FEATURE AMOUNT INTERPOLATION PROCESSING — S14

CALCULATE MOVEMENT AMOUNT OF CONTRACTED IMAGE FOR EACH OF SECOND BLOCKS CONSTITUTING CONTRACTED IMAGE — S15

CALCULATE MOVEMENT AMOUNT OF SECOND BLOCK AS MOVEMENT AMOUNT ADAPTIVE CONFIDENCE AND CORRECT — S16

EXECUTE IMAGE PROCESSING (HIGH-QUALITY IMAGE PROCESSING) FOR MAKING IMAGE QUALITY HIGHER ON ENLARGED IMAGE — S17

BLEND IMAGE ON WHICH HIGH-QUALITY IMAGE PROCESSING HAS BEEN PERFORMED ON ENLARGED IMAGE WITH INTENSITY IN ACCORDANCE WITH MOVEMENT AMOUNT ADAPTIVE CONFIDENCES AND FEATURE AMOUNTS AND GENERATE HIGH-QUALITY IMAGE — S18

OUTPUT HIGH-QUALITY IMAGE AS DIGITAL VIDEO IMAGE SIGNAL — S19

END

# FIG.11

```
            ┌─────────────────────────┐
            │  FEATURE AMOUNT         │
            │  INTERPOLATION          │
            │  PROCESSING             │
            └─────────────────────────┘
                        │
                        ▼
        ┌────────────────────────────────────┐
        │ SELECT PROCESSING TARGET BLOCK FROM │  S141
        │          FIRST BLOCKS               │
        └────────────────────────────────────┘
```

**S141** SELECT PROCESSING TARGET BLOCK FROM FIRST BLOCKS

**S142** IS FEATURE AMOUNT OF PROCESSING TARGET BLOCK EQUAL TO OR SMALLER THAN THE THRESHOLD $\alpha$ ?
— YES
— NO

**S143** DIVIDE PROCESSING TARGET BLOCK INTO A PLURALITY OF SUB BLOCKS

**S144** IS REFERENCE BLOCK OF WHICH FEATURE AMOUNT IS EQUAL TO OR SMALLER THAN THRESHOLD $\alpha$ PRESENT?
— NO
— YES

**S145** SET INTERPOLATION COEFFICIENT RELATING TO PRESENCE DIRECTION OF REFERENCE BLOCK OF WHICH FEATURE AMOUNT IS EQUAL TO OR SMALLER THAN THRESHOLD $\alpha$ FOR EACH SUB BLOCK BASED ON CENTER OF PROCESSING TARGET BLOCK AND BOUNDARY OF REFERENCE BLOCK

**S147** SET INTERPOLATION COEFFICIENT RELATING TO DIRECTIONS FOR EACH SUB BLOCK BASED ON CENTER OF PROCESSING TARGET BLOCK AND CENTERS OF REFERENCE BLOCKS

**S146** SET INTERPOLATION COEFFICIENT RELATING TO PRESENCE DIRECTION OF REFERENCE BLOCK OF WHICH FEATURE AMOUNT EXCEEDS THRESHOLD $\alpha$ FOR EACH SUB BLOCK BASED ON CENTER OF PROCESSING TARGET BLOCK AND CENTERS OF REFERENCE BLOCKS

**S148** INTERPOLATE FEATURE AMOUNTS OF RESPECTIVE SUB BLOCKS BY USING SET INTERPOLATION COEFFICIENTS

**S149** HAVE ALL FIRST BLOCKS BEEN PROCESSED?
— NO
— YES

RETURN